# EUROPÄISCHE PATENTSCHRIFT

(11) **EP 0 295 371 B1**
(45) Veröffentlichungstag und Bekanntmachung des Hinweises auf die Patenterteilung: **05.05.1993**
(21) Anmeldenummer: 88104713.8
(22) Anmeldetag: 24.03.1988
(51) Int. Cl.: G01N 21/90

(54) **Inspektionsmaschine für Kunststoffflaschen**
Inspection equipment for synthetic bottles
Dispositif pour l'inspection des bouteilles synthétiques

(30) Priorität: 12.05.1987 CH 1841/87
(43) Veröffentlichungstag der Anmeldung: 21.12.1988
(73) Patentinhaber: ELPATRONIC AG, CH-6300 Zug (CH)
(72) Erfinder: Bogatzki, Hans-Ulrich, CH-8049 Zürich (CH); Kramer, Felix, CH 8964 Friedlisberg (CH); Plester, George, D-4300 Essen 18 (DE); Scholl, Hans-Willy, D-4200 Oberhausen (DE)

(56) Entgegenhaltungen:
- AT-B- 340 705
- US-A- 3 010 310

## Beschreibung

Die Erfindung betrifft eine Inspektionsmaschine gemäß Oberbegriff des Anspruchs 1.

Die vorgenannte Inspektionsmaschine ist hauptsächlich zum Inspizieren von Rückgabeflaschen aus Kunststoff bestimmt, d.h. von Flaschen, die vom Kunden zurückgegeben und dann wieder befüllt werden, was etwa fünfundzwanzigmal pro Flasche erfolgen soll. Gedacht ist dabei insbesondere an Getränkeflaschen.

Zur Zeit erlebt zwar die Rückgabeflasche aus Glas ein Comeback aus Umweltschutzgründen, ihr Gewicht und ihre Zerbrechlichkeit sind jedoch der Grund dafür, daß führende Getränkehersteller ihre Aufmerksamkeit auf eine Rückgabeflasche geringeren Gewichtes richten. Geeignet dafür ist eine Flasche aus Polyethylenterephtalat oder PET. Eine PET-Flasche bietet beträchtliche Gewichtsvorteile. Eine volle 1,5-Liter-PET-Flasche wiegt nämlich nicht mehr als ihr 1-Liter-Gegenstück aus Glas. Die Hausfrau trägt mit derselben körperlichen Anstrengung also 50% mehr Inhalt nach Hause, und Lieferfahrzeuge belasten die Umwelt weniger und verbrauchen weniger Kraftstoff. Das sind nur einige der willkommenen Vorteile von PET- oder von Kunststoffflaschen allgemein.

Vor dem Wiederbefüllen müssen Kunststoffflaschen auf eine Reihe von Parametern überprüft werden, für die bei Glasflaschen überhaupt keine Notwendigkeit besteht. So ist es erforderlich, bei einer Kunststoffflasche vor dem Wiederbefüllen zu überprüfen, ob deren Boden, Hals und Öffnung noch rechtwinkelig zur Flaschenachse sind. Kunststoffflaschen sind nämlich unter Wärmeeinwirkung bleibend verformbar, und solche verformten Flaschen sind dann nicht einwandfrei oder nicht ohne Schwierigkeiten befüllbar. Aus dem gleichen Grund können sich bei Kunststoffflaschen im Laufe der Zeit die Flaschenhöhe und das Flaschenvolumen verändern, so daß nicht mehr die vorgeschriebene Füllmenge in die Flasche eingebracht werden kann.

Es gibt darüber hinaus aber auch Parameter, die bei Kunststoffflaschen ebenso wie bei Glasflaschen überprüft werden müssen. Zu diesen Parametern gehören ein Code, der gelesen werden muß (z.B. für Sortierungszwecke), und die Dichtigkeit der Flasche. Der letztgenannte Parameter kann bei Glasflaschen wegen Beschädigungen an der Mündung, durch Risse in der Wand, usw. überprüfenswert sein, bei Kunststoffflaschen ergibt sich die zusätzliche Notwendigkeit, die Dichtigkeit zu überprüfen, weil in Kunststoffflaschen leicht Löcher verursacht werden können (z.B. durch spitze Gegenstände, glimmende Zigarretten usw.), die unter Umständen mit dem Auge kaum sichtbar sind.

Inspektionsvorrichtungen der verschiedensten Art, auch für Kunststoffbehälter, gehören zwar zum Stand der Technik, es ist bislang jedoch keine Inspektionsmaschine bekannt geworden, die in der Lage ist, mit vertretbarem Kosten- und Zeitaufwand alle vorgenannten Parameterüberprüfungen durchzuführen.

So sind aus der DE-OS 26 20 046 ein Abgleichverfahren und eine Vorrichtung zur Fehlerfeststellung bei einem Hohlkörper aus transparentem Stoff bekannt, wobei als Stoff Glas und Kunststoff in Betracht kommen und als festzustellender Fehler z.B. Risse, Löcher, Abweichungen vom Sollmaß wie Mündungsneigung, Ovalität und fehlerhafte Länge des Hohlkörpers. Offenbar sind diese Fehler auf der bekannten Fehlerfeststellvorrichtung aber lediglich alternativ feststellbar. Das bekannte Verfahren und die bekannte Vorrichtung dienen mehr dem Ziel, den Abgleich der Auswerteelektronik auch bei einer Vielzahl von Prüfkanälen zu vereinfachen, abzukürzen und sicherer zu gestalten, eine Teilautomatisierung dieses Abgleichs zu erreichen, der Forderung nach höherer Empfindlichkeit der Fehlererkennung Rechnung zu tragen und eine störungsfreie Betriebsspannungsversorgung auch bei höheren Fehlernachweisempfindlichlichkeiten zu gewährleisten. Auch wenn die bekannte Vorrichtung mehrere Prüfkanäle aufweisen sollte, ließen sich mit ihr wiederzubefüllende Kunststoffflaschen zwischen einer Flaschenwaschanlage und einer Füllanlage nicht mit vertretbarem Zeitaufwand überprüfen, da in der bekannten Vorrichtung zu prüfende Hohlkörper nacheinander in eine Prüfstellung gebracht, in dieser festgehalten und überprüft und dann erst weitertransportiert werden. Das ließe sich aus zeitlichen Gründen mit dem vorgenannten Verwendungszweck, bei dem 600 Kunststoffflaschen/Minute überprüft werden müßten, nicht vereinbaren. Im übrigen arbeitet die bekannte Vorrichtung auch nur mit optischen Prüfeinrichtungen, die für den vorgenannten Verwendungszweck ebenfalls nicht geeignet sind, weil wiederzubefüllende Flaschen häufig Etikettenreste oder ganze Etiketten aus der Waschanlage mit sich führen, die jede optische Prüfung mit Ausnahme der Prüfung des Vorhandenseins von solchen Fremdkörpern wirkungslos machen würden.

Aus der DE-OS 30 36 502 ist eine Vorrichtung zur Inspektion von transparenten Behältern auf Fremdkörper bekannt, bei der der Zeitaufwand für die Inspektion zwar geringer ist als bei der vorgenannten bekannten Vorrichtung, weil die Behälter auf einer Förderbahn an einer Beleuchtungseinrichtung und einer gegenüber derselben angeordneten Abtasteinrichtung vorbeitransportiert werden, die Abtasteinrichtung arbeitet jedoch mit optoelektronischen, lichtempfindlichen Elementen, was die gleichen Nachteile wie bei der vorgenannten bekannten Vorrichtung ergibt. Der Hauptzweck der Vorrichtung zur Inspektion von transparenten Behältern ist daher auch eine zuverlässige Erkennung von an den Behälterwandungen haftenden Verunreinigungen oder Fremdkörpern wie Etikettenresten. Aus den genannten Gründen wäre diese bekannte Vorrichtung allenfalls zur Codeablesung, nicht aber zum Überprüfen von Parametern wie Rechtwinkeligkeit von Boden, Hals und Öffnung, Flaschenhöhe, Volumen und Dichtigkeit geeignet.

Aus der US-PS 3 010 310 ist eine Vorrichtung zum Testen von Glasflaschen bekannt, bei der sich der Zeitaufwand zwar verringern läßt, weil die Glasflaschen mittels eines Sternrades, dem sie durch eine Förderschnecke zugeführt werden, in ein umlaufendes Karussell eingebracht werden, welchem sie am Ende des Tests durch ein weiteres Sternrad wieder entnommen werden, diese bekannte Vorrichtung ist jedoch nur zur Durchführung eines Tests ausgebildet, nämlich eines Bersttests, bei dem die Glasflaschen innen mit pneumatischem Druck beaufschlagt werden, um festzustellen, ob sie Mindestfestigkeitserfordernisse erfüllen. Für die Serienüberprüfung von Kunststoffflaschen auf eine Anzahl von anderen Parametern ist diese bekannte Vorrichtung weder geeignet noch vorgesehen.

Mit der AT-A-340 705 ist ferner eine Vorrichtung zum selbsttätigen Prüfen von Hohlgläsern, z.B. Flaschen bekannt geworden. Hierbei werden die Flaschen in Ausnehmungen eines rotierenden Rundtisches eingegeben, wobei sie sich auf einer unterhalb jeder Ausnehmung befindlichen Tragrolle abstützen, deren Achse senkrecht zur Rotationsachse des Rundtisches gerichtet ist. Die Flaschen liegen an einem vorgespannten Keilriemen an, so dass sie sich während der Rotation des Rundtisches mehrfach um ihre Längsachse drehen und dabei auf den Tragrollen abrollen. Oberhalb der Flaschen sind Prüfköpfe angeordnet und mit dem Rundtisch über eine Nabe fest verbunden, wobei die Lage der Prüfköpfe der Höhe der zu kontrollierenden Flaschen angepasst werden kann. In jedem Prüfkopf sind eine Lichtquelle und eine Optik derart angeordnet, dass ein in einem spitzen Winkel zur Flaschenlängsachse verlaufendes Lichtbündel durch die Flaschenöffnung scharf auf den Boden der Flasche projiziert wird. Hierbei wird ein sich von der Mitte bis zum Rand des Flaschenbodens erstreckender Sektor angestrahlt. Unterhalb der Flaschenböden sind Photozellen angeordnet, auf welche das Lichtbündel gerichtet ist. Bei der Prüfung wird infolge Drehung der Flasche um ihre Längsachse der gesamte Flaschenboden durchleutet, so dass Verschmutzungen, Fremdkörper usw. mittels der Photozelle entdeckt werden können.

Aufgabe der Erfindung ist es, eine Inspektionsmaschine der eingangs genannten Art so auszubilden, daß auf ein und derselben Maschine zumindest die Prüfparameter Rechtwinkeligkeit des Bodens sowie Rechtwinkeligkeit von Hals und Öffnung der Flasche zur Flaschenachse und eventuell weiter Prüfparameter wie Volumen und Dichtigkeit, Flaschenhöhe und Flaschencode mit vertretbarem Zeitund Kostenaufwand überprüft werden können.

Diese Aufgabe ist erfindungsgemäß durch die im kennzeichnenden Teil des Patentanspruchs 1 angegebenen Merkmale gelöst.

Vorteilhafte Ausgestaltungen der Erfindung bilden den Gegenstand der Unteransprüche.

Gemäß der Erfindung lassen sich die Parameter Rechtwinkeligkeit des Bodens sowie Rechtwinkeligkeit von Hals und Öffnung der Flasche zur Flaschenachse auf einfache Weise überprüfen, weil bei nicht mehr vorhandener Rechtwinkeligkeit die Flasche bei der Drehung um ihre Achse unten und/oder oben eine taumelnde Bewegung ausführen wird, welche zu einem Ausgangssignal führt, das das Ausscheiden der Flasche als fehlerhaft veranlassen wird. Wie auch bei allen anderen Prüfvorgängen bietet das Karussell den Vorteil, daß sich durch dessen Drehung weitere, für die Prüfung erforderliche Bewegungen erzeugen lassen, ohne daß dafür spezielle zusätzliche Antriebsvorrichtungen erforderlich sind. So wird aus der Karusselldrehung eine Drehung des Tellers (durch Eingriff zweier Zahnräder), auf dem die Flasche steht, abgeleitet.

In der Ausgestaltung der Erfindung nach Anspruch 2 ist für die Erfassung des Parameters Volumen und Dichtigkeit wiederum eine durch die Karusselldrehung gesteuerte Vorrichtung vorgesehen, mittels welcher das Flascheninnere mit Druck beaufschlagbar ist. Wenn ein bestimmter Druckwert nicht erreicht wird, dürfte die Flasche durchlöchert oder im Volumen vergrößert sein, und wenn der bestimmte Druckwert überschritten wird, dürfte die Flasche zusammengedrückt sein, also ihr Nennvolumen nicht mehr aufweisen. In beiden Fällen würde die Flasche als defekt ausgeschieden. Die Ausgestaltung der Erfindung nach Anspruch 2 zeigt eine zweckmäßige Möglichkeit der Druckbeaufschlagung des Inneren der Flasche mittels eines Kolbens, der durch seine Kolbenstange durch eine am Karussell vorgesehene Kurvenscheibe betätigbar ist, um eine bestimmte Luftmenge in die Flasche zu pressen.

Lediglich in den Ausgestaltungen der Erfindung nach den Ansprüchen 3 und 4 werden Parameter erfaßt, indem zweckmäßig Lichtsensoren eingesetzt werden. In der Ausgestaltung nach Anspruch 3 kann es zum Erfassen des Parameters "Flaschenhöhe" aber auch zweckmäßig sein, z.B. eine magnetische od.dgl. Sensoreinrichtung einzusetzen. Lediglich in der Ausgestaltung nach Anspruch 3 bewegt sich der Sensor nicht mit dem Karussell mit. Es bewegt sich vielmehr die durch diesen zu erfassende Marke, die irgendein für die Erfassung geeignetes Gebilde sein kann (z.B. ein Körper, eine Farbmarkierung od.dgl.).

In der Ausgestaltung der Erfindung nach Anspruch 4 sind die Marken als Codemarken an der Flasche selbst vorgesehen, und die sich um ihre Achse drehende Flasche bewegt die Codemarken an dem Sensor vorbei. In der Ausgestaltung der Erfindung nach Anspruch 4 wird durch das Anblasen der Flasche im Flaschencodebereich mit Luft eine Fehlerquelle ausgeschaltet, die im Stand der Technik häufig den Prüfvorgang beeinträchtigt hat, nämlich im Bereich der abzutastenden Marke befindliche Wassertropfen, Etikettenreste od.dgl.

Ein Ausführungsbeispiel der Erfindung wird im folgenden unter Bezugnahme auf die Zeichnungen näher beschrieben. Es zeigt
- Fig.1: eine erfindungsgemäße Inspektionsmaschine für Kunststoffflaschen, von der lediglich die für den Transport der Flaschen durch die Maschine und für das Drehen der Flaschen um ihre eigene Achse wesentlichen Teile dargestellt sind,
- Fig. 2: eine von sechzehn Stationen des Karussells der Inspektionsmaschine nach Fig. 1,
- Fig. 3: als Einzelheit in einer Teilschnittdarstellung einen Teller mit zugeordneter Sensoreinrichtung zum Feststellen der Rechtwinkeligkeit des Flaschenbodens zur Flaschenachse,
- Fig. 4: als Einzelheit in einer Teilschnittdarstellung einen auf die Flasche absenkbaren Kopf und Sensoreinrichtungen zum Feststellen der Rechtwinkeligkeit von Hals und Öffnung zur Flaschenachse, Volumen und Dichtigkeit sowie Flaschenhöhe,
- Fig. 5: in einer Einzeldarstellung die Art des Ableitens der Vertikalbewegung eines den Kopf nach Fig. 4 tragenden Schlittens von der Drehbewegung des Karussells.

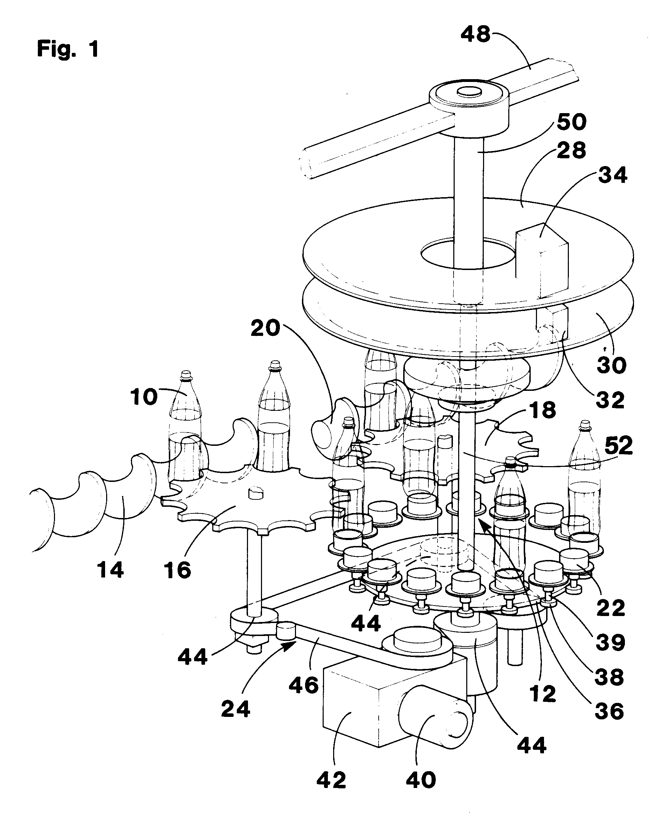

Fig. 1 zeigt ein Ausführungsbeispiel einer Inspektionsmaschine für Flaschen 10 aus Kunststoff, insbesondere aus PET. In Fig. 1 sind lediglich die wesentlichen Fördereinrichtungen dargestellt, mittels welchen die Flaschen 10 einem drehbaren Karussell 12 zugeführt und nach erfolgter Prüfung wieder entnommen werden. Zu den Fördereinrichtungen gehören eine Eingangsförderschnecke 14, ein Eingangssternrad 16, ein Ausgangssternrad 18 und eine Ausgangsförderschnecke 20. Das Eingangssternrad 16 übergibt die Flaschen 10 an Teller 22 des Karussells 12, auf denen die Flaschen bis zum Ausgangssternrad 18 transportiert werden. Unterhalb der Förderschnecken 14 und 20 befinden sich nicht dargestellte Förderbahnen, auf denen die Flaschen durch die sich um ihre Längsachse drehenden Förderschnecken vorgeschoben werden. In Längsrichtung neben den Förderschnecken sind ebenfalls nicht dargestellte Begrenzungen vorgesehen, mittels welchen die Flaschen in den Gewindegängen der Förderschnecken gehalten werden. Die Förderschnecken 14, 20, die Sternräder 16, 18 und das Karussell 12 werden über einen gemeinsamen Kettentrieb 24 in Drehung versetzt, so daß sie sich genau synchron bewegen. Das ist wichtig, weil eine bei der Prüfung als fehlerhaft erkannte Flasche an einer bestimmten Stelle am oder nach der Ausgangsförderschnecke 20 durch einen Auswerfer ausgeschieden wird, der beispielsweise bei Betätigung einen Druckluftstoß auf die betreffende Flasche ausübt, um sie aus der Reihe der übrigen Flaschen zu entfernen. Die synchrone Zuordnung der Bewegungen der Umfangsvertiefungen der Sternräder 16, 18, der Förderschnecken 14, 20 und der Teller 22 des Karussells 12 gewährleistet, daß sich in einem bestimmten Zeitpunkt die auszuwerfende Flasche genau vor dem Auswerfer befindet.

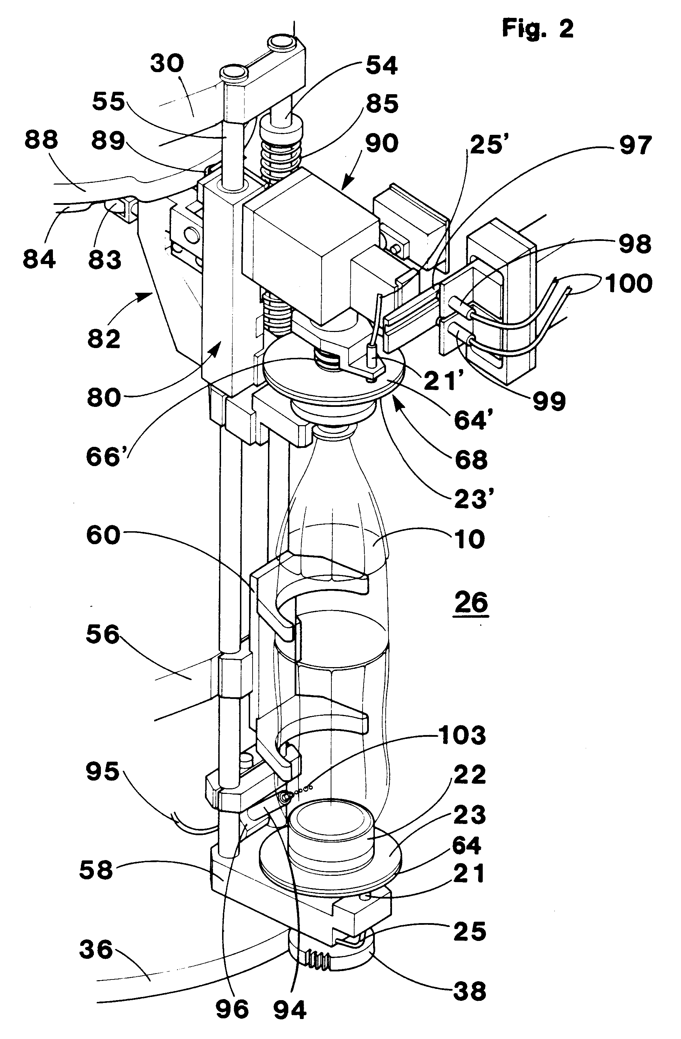

Das in Fig. 1 dargestellte Karussell 12 weist sechzehn Stationen 26 (Fig. 2) zum Aufnehmen der zu inspizierenden Flaschen 10 auf. Von den Stationen 26 sind in Fig. 1 nur der Teller 22 und dessen weiter unten noch näher beschriebene Antriebseinrichtung gezeigt, wogegen in Fig. 2 als Einzelheit eine vollständige Station dargestellt ist. Fig. 1 zeigt zwei obere Tragplatten 28, 30, die Teil eines nicht dargestellten Karussellrahmens sind. An der unteren Tragplatte 30 ist das obere Ende jeder Station 26 befestigt, was in Fig. 2 gezeigt und weiter unten noch näher beschrieben ist. Wenn das Karussell 12 durch den Kettentrieb 24 in Drehung versetzt wird, drehen sich also auch die Tragplatten 28 und 30. Zwischen den Tragplatten 28 und 30 ist eine mit diesen umlaufende Steuerungselektronik 32 befestigt, die lediglich symbolisch für eine Station 26 dargestellt ist. Auf der Tragplatte 28 ist eine mit dieser umlaufende Auswerteelektronik 34 befestigt, die ebenfalls lediglich symbolisch für eine Station 26 dargestellt ist. Die Steuerungselektronik 32 ist eine frei programmierbare Elektronik, die die einzelnen Prüfvorgänge steuert. Die elektrische Betriebsspannung wird an das Karussell 12 über eine unten angeordnete, nicht dargestellte Schleifringanordnung angelegt. Über eine entsprechende Schleifringanordnung od.dgl. ist am oberen Ende des Karussells die Auswerteelektronik 34 mit stationären Datenverarbeitungseinrichtungen (Anzeigevorrichtungen, Druckern od.dgl.) verbunden.

Unmittelbar unterhalb des Karussells 12 ist ein stationäres Sonnenrad 36 angeordnet, mit dessen Verzahnung Planetenräder 38 in Eingriff sind. Jeweils ein Planetenrad 38 ist mit einem der Teller 22 durch eine Welle 39 verbunden, so daß bei Drehung des Karussells 12 die mit diesem umiaufenden Planetenräder 38 in Drehung versetzt werden, die ihrerseits die Teller 22 in Drehung versetzen. Die Antriebsbewegung des Karussells 12 wird durch einen Elektromotor 40 über ein Getriebe 42 erzeugt, das den Kettentrieb 24 antreibt. Diese Antriebsbewegung wird auf die Sternräder 16, 18, und das Karussell 12 durch Kettenräder 44 übertragen, um die eine gemeinsame Kette 46 geschert ist. Das stationäre Rahmengestell der Inspektionsmaschine ist lediglich durch einen Querträger 48 und eine Mittelsäule 50 angedeutet. In der Mittelsäule 50 ist die Welle 52 an ihrem oberen Ende drehbar gelagert. Am unteren Ende trägt die Welle 52 eines der erwähnten Kettenräder 44.

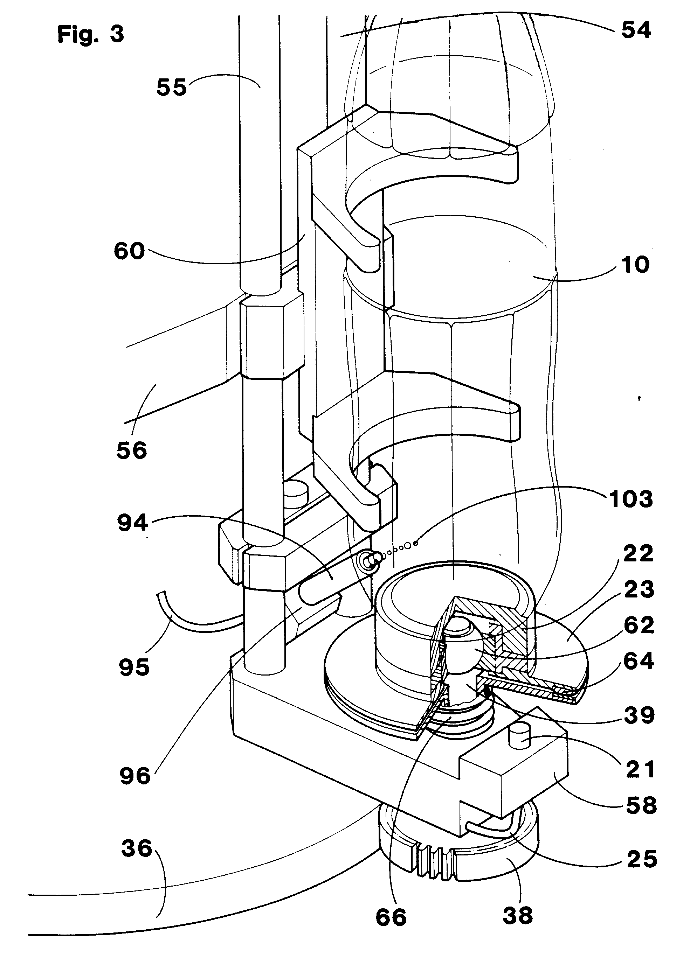

Unter Bezugnahme auf die Fig. 2 und 3 wird nun der Aufbau der Stationen 26 näher beschrieben, die alle den gleichen Aufbau haben, weshalb nur eine Station beschrieben wird. Die Station 26 weist zwei vertikale Tragsäulen 54, 55 auf, welche an ihrem oberen Ende an der Tragplatte 30 befestigt sind. Weiter sind die Tragsäulen 54, 55 in ihrem unteren Bereich an einer karussellfesten Tragplatte 56 befestigt. Am unteren Ende der Tragsäulen 54, 55 ist eine horizontale Konsole 58 befestigt, die den Teller 22 und dessen Antriebseinrichtung in Form des Planetenrades 38 trägt, das mit dem Sonnenrad 36 in Eingriff ist. An der Tragplatte 56 ist weiter ein Gabelkopf 60 mit zwei Gabeln befestigt, welche die Flasche 10 erfassen.

Die Welle 39 des Planetenrades 38 trägt am oberen Ende ein Kugelgelenk 62, das so ausgebildet ist, daß der Teller 22 sich gemeinsam mit dem Planetenrad 38 dreht, dabei aber allseitig schwenkbeweglich ist. Zwischen dem Teller 22, an dem ein breiter Flansch 23 befestigt ist, und der Konsole 58 ist ein auf der Welle 39 verschiebbar angeordneter Flansch 64 vorgesehen, der durch eine Feder 66 gegen die Unterseite des Flansches 23 gedrückt wird. Die Feder 66 stützt sich mit ihrem unteren Ende auf der Konsole 58 ab.

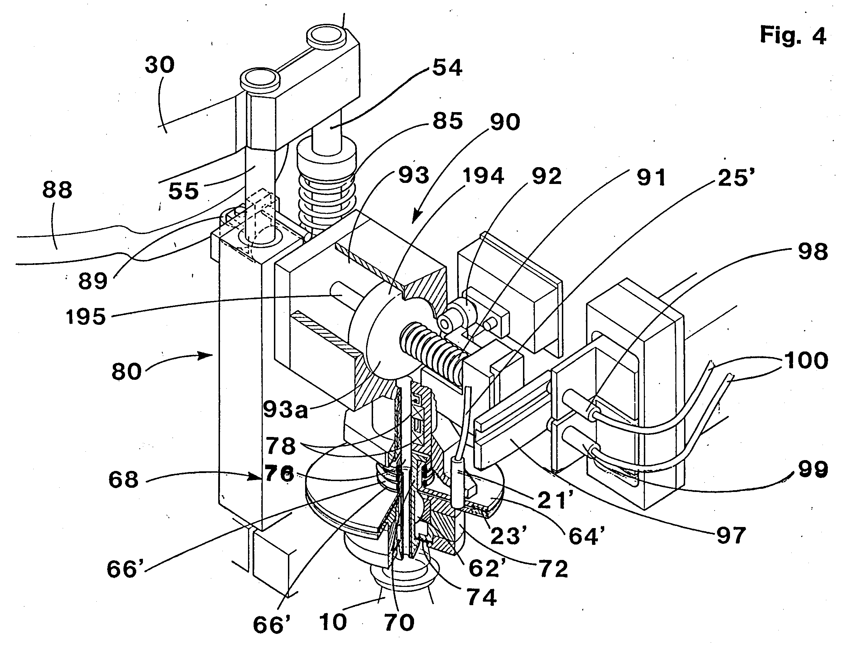

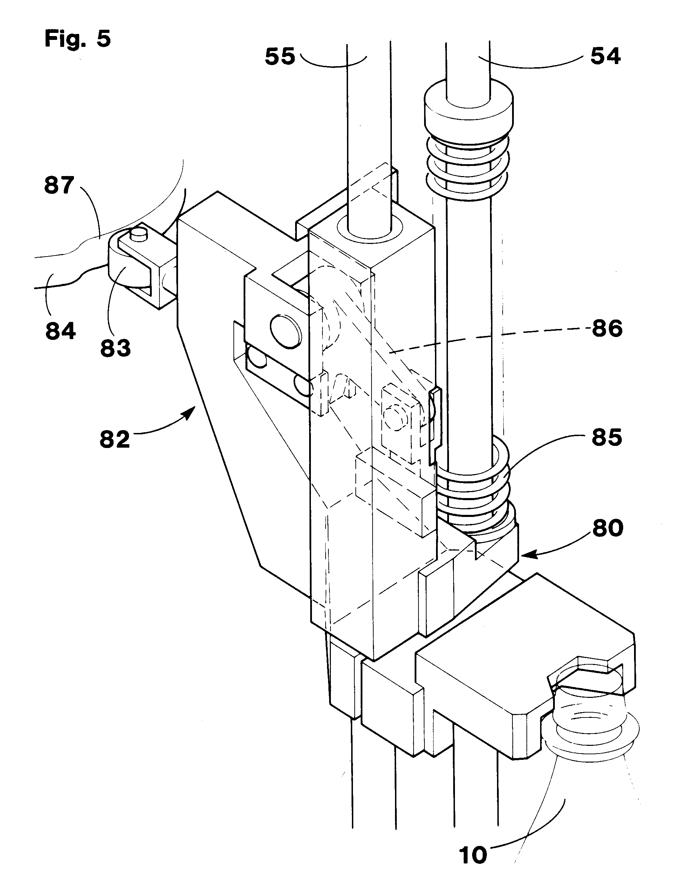

Gegenüber dem Teller 22 ist gemäß Fig. 4 an den Tragsäulen 54, 55 ein längs der Tragsäulen verschiebbarer Kopf 68 zum Erfassen der Mündung der Flasche 10 vorgesehen. Der Kopf 68 hat im wesentlichen den gleichen vorbeschriebenen Aufbau wie der Teller 22, d.h. er weist einen gegenüber dem Teller 22 vorgesehenen, auf einem Kugelgelenk 62′ allseits beweglichen Flansch 23′ auf, an den von oben her mittels einer Feder 66′ ein Flansch 64′ angedrückt wird, der auf einer Achse 70 des Kopfes verschiebbar angeordnet ist. Entsprechend dem Teller 22 weist der Kopf 68 ein Kopfstück 72 auf, das eine in einer ringförmigen Vertiefung angeordnete Dichtung 74 aufweist, mittels welcher das Kopfstück 72 dicht auf die Flaschenmündung preßbar ist. Der gesamte Kopf 68 ist auf einer Hohlachse 76 mittels Wälzlagern 78 drehbar gelagert. Die Hohlachse 76 ist an einem Schlitten 80 befestigt, der auf den vertikalen Tragsäulen 54, 55 verschiebbar angeordnet ist. Radial einwärts von dem Schlitten 80 ist eine Kniehebelvorrichtung 82 vorgesehen, die über eine Abtastrolle 83 eine am Maschinengestell befestigte Kurvenscheibe 84 abtastet und eine dabei erzeugte Radialbewegung der Abtastrolle 83 in eine Vertikalbewegung des Schlittens 80 gegen die Kraft einer Schraubenfeder 85 umsetzt, was aus der Darstellung in Fig. 5 ohne weiteres ersichtlich sein dürfte. Wenn auf der Kurvenscheibe 84 eine Erhöhung kommt, wird die Abtastrolle 83 in Fig. 5 radial nach rechts gedrückt, wodurch sich ein Kniehebel 86 nach oben bewegt und dabei den Schlitten 80 gegen die Kraft der Feder 85 mitnimmt. Wenn dann auf der Kurvenscheibe 84 ein Tal 87 kommt (jeder Station 26 ist ein solches Tal 87 zugeordnet), bewegt sich der Schlitten 80 nach unten und drückt den Kopf 68 auf die Flaschenmündung. Dem Teller 22 ist ein Annäherungssensor 21 zugeordnet. Entsprechend ist dem Kopf 68 ein Annäherungssensor 21′ zugeordnet. Die Annäherungssensoren 21 und 21′ sind karussellfest angeordnet, machen also die Drehbewegung der zwischen dem Teller 22 und dem Kopf 68 eingespannten Flasche 10 um die Flaschenachse bei der Karusselldrehbewegung nicht mit. Wenn bei der zwischen Teller und Kopf eingespannten Flasche 10 Boden, Hals und/oder Öffnung nicht rechtwinkelig zur Flaschenachse sein sollten, würden bei der Flaschendrehung der Flansch 23 und/oder der Flansch 23′ wegen des Kugelgelenks 62 bzw. 62′ eine taumelnde Bewegung ausführen und dadurch den Flansch 64 bzw. 64′ axial verschieben und diesen dadurch dem Annäherungssensor 21 bzw. 21′ mehr oder weniger annähern. Diese Annäherung wird dann in der Auswerteelektronik 34, mit der die Annäherungssensoren 21, 21′ verbunden sind, erfaßt und ausgewertet, worauf weiter unten noch näher eingegangen wird.

Der Schlitten 80 trägt weiter eine Vorrichtung 90, mittels welcher, wiederum gesteuert durch die Karusselldrehung, durch den Kopf 68 hindurch das Innere der Flasche 10 mit Druck beaufschlagbar ist, der durch einen am Kopf befestigten Drucksensor 92 erfaßbar ist. Die Druckbeaufschlagungsvorrichtung 90 weist einen in einem Zylinder 93 angeordneten, radial verschiebbaren Kolben 194 auf, dessen Kolbenstange 195 durch eine am Maschinengestell befestigte Kurvenscheibe 88 (vgl. Fig. 2 und 4) über eine Abtastrolle 89 gegen den Druck einer Rückstellfeder 91 radial verschiebbar ist. Auf der der Rückstellfeder 91 zugewandten Seite des Kolbens 94 befindet sich ein Zylinderraum 93a, der einerseits mit dem Drucksensor 92 und andererseits über die Hohlachse 76 und die ebenfalls hohl ausgebildete Achse 70 mit dem Flascheninneren in Verbindung steht. Wenn die Abtastrolle 89 auf der Kurvenscheibe 88 durch eine Erhöhung radial nach außen gedrückt wird, wird die in dem Zylinderraum 93a befindliche Luftmenge durch den sich in Fig. 4 nach rechts bewegenden Kolben 194 in die Flasche 10 gepreßt. Die Art der Auswertung dieses Prüfvorganges ist weiter unten erläutert.

Gemäß der Darstellung in den Fig. 2 und 3 ist der Station 26 ein optisch-elektrischer Sensor 94 zugeordnet, der dazu dient, eine Flaschencodemarkierung 103 in Form von erhabenen Punkten oder Strichen zu erfassen. Es kann sich dabei um einen handelsüblichen Sensor handeln, der mittels Lichtleitern ein von einer Lichtquelle (z.B. einer Leuchtdiode) ausgesandtes Lichtbündel auf die Flasche wirft und ein durch die Codemarkierung 103 reflektiertes Lichtbündel zurück zu einem fotoelektrischen Empfänger überträgt. Über eine Leitung 95 ist der Sensor 94 mit der Auswerteelektronik 34 verbunden.

Jede Station ist weiter mit einer Luftdüse 96 versehen, die in den Fig. 2 und 3 einfach als eine neben dem Sensor 94 angeordnete Luftaustrittsöffnung symbolisch dargestellt ist. Die Luftdüse 96 richtet einen Druckluftstrahl auf einen Bereich, welchen die Codemarkierung 103 bei der Drehung der Flasche 10 durchlaufen wird. Der Druckluftstrahl entfernt Wassertropfen, die den Prüfvorgang beeinträchtigen könnten, von der Flaschenoberfläche.

Der in der Beschreibung und in den Patentansprüchen verwendete Begriff "Sensoreinrichtung" beinhaltet jeweils einen Sensor und eine durch diesen abzutastende Marke. Sämtliche oben beschriebenen Sensoren laufen jeweils mit dem Karussell 12 um und tasten dabei die sich an ihnen vorbeibewegende "Marke" ab. Letztere ist bei den Sensoren 21, 21′ der axial verschiebbare Flansch 64 bzw. 64′. Die Inspektionsmaschine weist aber schließlich noch eine weitere Sensoreinrichtung auf, bei der der Sensor am Maschinengestell fest angebracht ist und die Marke mit dem Karussell 12 umläuft Diese weitere Sensoreinrichtung dient zum Erfassen der Flaschenhöhe. Als Marke ist an dem Schlitten 80 ein Gebilde in Form eines Stahlstückes 97 befestigt. Jede Station weist ein solches Stahlstück 97 auf. Dagegen ist sämtlichen Stahlstücken ein gemeinsamer stationärer Sensor 98 zugeordnet, der gemäß der Darstellung in Fig. 4 mittels eines Winkels am Maschinengestell befestigt ist. Der Sensor 98 kann ein magnetischer oder ein optischer Sensor sein. In letzterem Fall könnte das Gebilde 97 auch einfach eine reflektierende Markierung, eine Hell/Dunkel-Markierung, eine Farbmarkierung od.dgl. sein. Ein in Fig. 4 dargestellter weiterer Sensor 99, der den gleichen Aufbau wie der Sensor 98 hat, dient als Minimumsensor, der nur anspricht, wenn der Kopf 80 zu weit abgesenkt wird, weil keine Flasche 10 oder eine zu niedrige Flasche in der Station 26 vorhanden ist. Über Leitungen 100 sind die Sensoren 98 und 99 an die Auswerteelektronik 34 angeschlossen. Über Leitungen 25 und 25′ (vgl. Fig. 2-4) sind die Sensoren 21 bzw. 21′ an die Auswerteelektronik 34 angeschlossen.

Vorstehende Beschreibung dürfte ohne weiteres erkennen lassen, wie die eingangs erwähnten Parameter von Kunststoffflaschen auf der Inspektionsmaschine nach der Erfindung erfaßbar sind, nämlich folgendermaßen:
Zum Erfassen des Parameters "Rechtwinkeligkeit des Flaschenbodens zur Flaschenachse" sowie des Parameters "Rechtwinkeligkeit von Hals und Öffnung der Flasche zur Flaschenachse" dienen die Sensoreinrichtungen 21, 64 bzw. 21′, 64′. Wenn die Flasche 10 nicht rechtwinkelig ist, führt sie bei der Drehung um ihre Achse eine taumelnde Bewegung aus, die den Flansch 23 und/oder 23′ ebenfalls in eine taumelnde Bewegung versetzt, welche über den dann axial verschobenen Flansch 64 bzw. 64′ durch den Annäherungssensor 21 bzw. 21′ erfaßt wird. Die Auswerteelektronik 34 vergleicht die durch die Taumelbewegung hervorgerufene Flanschverschiebung mit einem Grenzwert und betätigt bei Überschreitung desselben später dann den Auswerfer, wenn die betreffende Flasche sich an ihm vorbeibewegt.

Zum Erfassen des Parameters "Volumen und Dichtigkeit der Flasche" wird durch den Drucksensor 92 der Druck erfaßt, der sich aufbaut, wenn das Luftvolumen aus dem Zylinderraum 93a in das Flascheninnere gepreßt wird. Die Auswertelektronik 34 vergleicht den Gegendruckwert wiederum mit einem Grenzwert und betätigt später den Auswerfer bei zu großer Abweichung von diesem Grenzwert. Eine dichte Flasche mit bestimmtem Volumen hat einen bestimmten Gegendruckgrenzwert. Wenn die Flasche ein Loch haben sollte, wird der Grenzwert beim Einpressen des genannten Luftvolumens nicht erreicht. Sollte die Flasche im Gebrauch bleibend verformt worden sein, wird ihr Volumen kleiner als das ursprüngliche Nennvolumen sein. Beim Einpressen des genannten Luftvolumenswird deshalb der Gegendruckgrenzwert überschritten werden.

Zum Erfassen des Paramters "Flaschenhöhe" wird wie bereits dargelegt die Höhenlage des Gebildes 97 aller Stationen 26 durch den ihnen gemeinsamen Sensor 98 erfaßt.

Schließlich wird zum Erfassen des Parameters "Flaschencode" die Flaschencodemarkierung 103, die in Form von erhabenen Punkten oder Strichen auf der Flaschenoberfläche vorhanden ist, optisch erfaßt. Die Erfassung dieses Parameters ermöglicht, Flaschen zu sortieren, Flaschen fremder Hersteller auszusortieren, Flaschen die ein bestimmtes Alter bereits erreicht haben, auszusondern, usw.

Bei den vorstehend beschriebenen Inspektions- oder Prüfvorgängen ist es wichtig, daß die Relativgeschwindigkeit zwischen Sensor und zugeordneter Marke während des Erfassungsvorganges nicht zu hoch ist und daß ausreichend Zeit für einoder mehrmaliges Ausführen eines Erfassungsvorganges zur Verfügung steht. Diese Kriterien sind bei der oben beschriebenen Inspektionsmaschine optimal erfüllt, da, mit Ausnahme der Erfassung des Parameters "Flaschenhöhe" in allen Fällen "umlaufende Messungen" bei bezüglich der zu erfassenden Marke stillstehendem Sensor ausgeführt werden. Das Karussell 12 dreht sich, und jede Flasche 10 dreht sich um ihre eigene Achse, der Prüfling führt also zwei Drehbewegungen gleichzeitig aus, nämlich eine Orbitalbewegung um die Karussellmittelachse und eine Drehbewegung um die Flaschenachse. Diese beiden Drehbewegungen werden für sämtliche Parametererfassungen, mit Ausnahme der Erfassung des Parameters Flaschenhöhe, ausgenutzt. Da zwischen der Stelle, an der die Flasche 10 das Eingangssternrad 16 verläßt und von einer Station 26 aufgenommen wird, und der Stelle, an welcher dieselbe Flasche dieselbe Station verläßt und von dem Ausgangssternrad 18 aufgenommen wird, viel Zeit zur Verfügung steht, kann jede Messung ohne weiteres mehrmals ausgeführt werden. Das ist ein weiterer wichtiger Vorteil der hier beschriebenen Inspektionsmaschine, der dadurch erzielt wird, daß die Erfassungselemente bei der Inspektion quasi mit der Flasche 10 auf dem Karussell mitlaufen. Das gilt zwar nicht für die Flaschenhöhenmessung, diese hat aber in der hier beschriebenen Ausgestaltung den Vorteil, daß für alle Stationen lediglich ein und derselbe Sensor 98 benötigt wird. Besonders geringer Leitungsaufwand wird erzielt, weil sich die gesamte Auswerteelektronik 34 ebenfalls mit dem Karussell 12 mitbewegt.

Bei der Erfassung der Rechtwinkeligkeit von Boden, Hals und Öffnung zur Flaschenachse wird eine Genauigkeit von ± 1° erzielt. Bei der Volumen- und Dichtigkeitsmessung wird eine Genauigkeit von ± 2 Vol.-% erzielt. Bei der Flaschenhöhenmessung wird eine Genauigkeit von ± 1 Millimeter erzielt. Diese Angaben beziehen sich auf zu prüfende Kunststoffflaschen mit einem Nenninhalt von 1 1 oder 1,5 1.

Die Drehbewegung einer Flasche erfolgt erwünschtermaßen langsam, so daß die entsprechenen Prüfvorgänge ungestört ausgeführt werden können. Eine sich während des Prüfvorganges bezüglich des Sensors 94 langsam bewegende Flasche wird z.B. keine Wassertropfen im Sensorbereich durch die Luft wirbeln lassen, die den Lesevorgang beeinträchtigen würden.

## Patentansprüche

1. Inspektionsmaschine für Kunststoffflaschen, mit einem um eine vertikale Achse drehbaren Karussell (12) mit mehreren Stationen (26) zum Aufnehmen der zu inspizierenden Flaschen (10), mit Sensoreinrichtungen bestehend jeweils aus einem Sensor (21, 21', 92, 94) und einer durch diesen abzutastenden Marke (64, 64', 97, 103) zum Erzeugen von entsprechenden Ausgangssignalen, und mit einer Auswerteelektronik (34) zum Verarbeiten der Ausgangssignale, wobei
a) jede Station (26) einen Teller (22) aufweist, auf dem sich die Flasche (10) abstützt und um ihre eigene Achse drehbar ist, und
b) alle Sensoren (21, 21', 92, 94) und/oder zumindest die diesen zugeordnete Marke (64, 64', 97, 103) am Karussell (12) befestigt sind und sich mit diesem mitdrehen,
dadurch **gekennzeichnet,**
- dass der Teller (22) auf einem Kugelgelenk (62) befestigt ist, das über eine Welle (39) mit einem Planetenrad (38) verbunden ist, wobei ein stationäres Sonnenrad (36) vorgesehen ist, mit dem das Planetenrad (38) im Eingriff steht, so dass bei Drehung des Karussells (21) das Planetenrad (38) und mit ihm der Teller (22) mit der Flasche (10) in Drehung versetzt werden, wobei der Teller aber allseitig schwenkbeweglich ist,
- dass die Flasche (10) gegenüber dem Teller (22) durch ein Kopfstück (72) an der Mündung der Flasche festspannbar ist, das an einem vertikal verschiebbaren Schlitten (80) an einem weiteren Kugelgelenk (62') frei drehbar befestigt ist, wobei eine Kniehebelvorrichtung (82) vorgesehen ist, die mittels einer bei Drehung des Karussells (12) eine am Maschinengestell befestigte Kurvenscheibe (84) abtastenden Abtastrolle (83) betätigbar ist und eine dabei erzeugte Radialbewegung der Abtastrolle in eine Vertikalbewegung des Schlittens umsetzt, und
- dass zum Erfassen der Parameter "Rechtwinkeligkeit des Bodens" sowie "Rechtwinkeligkeit von Hals und Oeffnung der Flasche zur Flaschenachse" jeder Station (26) zwei Sensoreinrichtungen (21, 64; 21', 64') zugeordnet sind, die jeweils einen Annäherungssensor (21; 21') aufweisen, und dass jedem Annäherungssensor als Marke ein längs der Flaschenachse verschiebbarer und in Richtung des Bodens bzw. der Oeffnung der Flasche federvorbelasteter Flansch (64; 64') zugeordnet ist, der durch den bei Fehlen der Rechtwinkeligkeit taumelnden Teller (22) bzw. das bei Fehlen der Rechtwinkeligkeit taumelnde Kopfstück (72) axial in Richtung zum Annäherungssensor (21; 21') drückbar ist.

2. Inspektionsmaschine nach Anspruch 1, wobei zum Erfassen des Parameters "Volumen und Dichtigkeit" jeder Station (26) eine Vorrichtung (90) zugeordnet ist, mittels welcher, gesteuert durch die Karusselldrehung und eine zweite am Maschinengestell befestigte Kurvenscheibe (88), das Innere der Flaschen (10) mit Druck beaufschlagbar ist, der durch einen Drucksensor (92) erfassbar ist, wobei vorgesehen ist, dass die Vorrichtung (90) einen in einem Zylinder (93) angeordneten Kolben (194) aufweist, dessen Kolbenstange (195) durch die Kurvenscheibe (88) betätigbar ist, wodurch aus einem mit dem Drucksensor (92) verbundenen Zylinderraum (93a) vor dem Kolben (194) ein bestimmtes Luftvolumen durch den Kopf (68) hindurch in die Flasche (10) pressbar ist.

3. Inspektionsmaschine nach Anspruch 1, dadurch gekennzeichnet, dass zum Erfassen des Parameters "Flaschenhöhe" jeder Schlitten (80) als Marke ein Gebilde (97) trägt, dessen Höhenlage durch einen stationären, allen Stationen (26) gemeinsamen Sensor (98) erfassbar ist.

4. Inspektionsmaschine nach Anspruch 1, dadurch gekennzeichnet, dass zum Erfassen des Parameters "Flaschencode" jede Station (26) eine Sensoreinrichtung in Form eines optisch-elektrischen Sensors (94) zum Erkennen einer an den Flaschen (10) vorgesehenen Flaschencodemarkierung (103) aufweist, wobei an jeder Station (26) eine Luftdüse (96) zum Anblasen der Flasche (10) im Bereich der Flaschencodemarkierung (103) vorgesehen ist.

## Claims

1. Inspection machine for plastic bottles, having a turntable (12) which is rotatable about a vertical axis and which has a plurality of stations (26) for receiving the bottles (10) to be inspected, having sensor devices each consisting of a sensor (21, 21', 92, 94) and a mark (64, 64', 97, 103) to be sensed by this for producing corresponding output signals, and having an electronic evaluation system (34) for processing the output signals, wherein
a) each station (26) comprises a plate (22) on which the bottle (10) rests and is rotatable about its own axis, and
b) all the sensors (21, 21', 92, 94) and/or at least the marks associated with these (64, 64', 97, 103) are secured to the turntable (12) and rotate jointly with this,
characterised in that
- the plate (22) is fixed on a ball-and-socket joint (62) which is joined via a shaft (39) to a planet wheel (38), there being provided a stationary sun gear (36) with which the planet wheel (38) is in engagement, with the result that when the turntable (21) is rotated, the planet wheel (38) and with it the plate (22) with the bottle (10) are set in rotation, yet the plate is polydirectionally movable by swivelling,
- the bottle (10) can be gripped relative to the plate (22) at the bottle mouth by a headpiece (72) which is secured to a vertically displaceable carriage (80) for free rotation on a further ball-and-socket joint (62'), there being provided a toggle lever device (82) which can be operated by means of a scanning roller (83) which scans a camplate (84) secured to the machine frame as the turntable rotates (12) and converts an accompanying radial motion of the scanning roller into a vertical motion of the carriage, and
- associated with each station (26) in order to detect the parameters "perpendicularity of the bottom" and "perpendicularity of the neck and mouth of the bottle to the bottle axis" are two sensor devices (21, 64; 21', 64'), each of which comprises a proximity sensor (21; 21'), and that associated with each proximity sensor as a mark is a flange (64; 64') which is displaceable along the bottle axis and is biased by a spring in the direction of the bottom or the mouth of the bottle and which can be urged axially in the direction of the proximity sensor (21; 21') by the plate (22) wobbling in the absence of perpendicularity or the headpiece (72) wobbling in the absence of perpendicularity.

2. Inspection machine according to claim 1, wherein associated with each station (26) in order to detect the parameter "volume and fluid-tightness" is a device (90) by means of which, controlled by the rotation of the turntable and a second camplate (88) secured to the machine frame, pressure can be applied to the interior of the bottle (10), which pressure can be detected by a pressure sensor (92), wherein it is provided that the device (90) comprises a piston (194) which is disposed in a cylinder (93) and the piston rod (195) of which can be actuated by the camplate (88), as a result of which a certain volume of air can be forced out of a cylinder compartment (93a), in front of the piston (194) and connected to the pressure sensor (92), through the head (68) and into the bottle (10).

3. Inspection machine according to claim 1, characterised in that in order to detect the parameter "height of bottle", each carriage (80) carries, as a mark, a formation (97) the vertical position of which can be detected by a stationary sensor (98) common to all the stations (26).

4. Inspection machine according to claim 1, characterised in that in order to detect the parameter "bottle code", each station (26) comprises a sensor device in the form of an opto-electrical sensor (94) for detecting a bottle code marking (103) provided on the bottle (10), an air nozzle (96) being provided at each station (26) to blow on the bottle (10) in the region of the bottle code marking (103).

## Revendications

1. Machine d'inspection de bouteilles en matière plastique, comprenant un carrousel (12), monté rotatif autour d'un axe vertical et comportant plusieurs postes (26) destinés à recevoir des bouteilles (10) à inspecter, des dispositifs de détection, constitués chacun d'un capteur (21, 21', 92, 94) et d'un repère (64, 64', 97, 103) devant être détecté par ce capteur en vue de produire des signaux correspondants de sortie, et un circuit électronique d'exploitation (34) servant à traiter ces signaux de sortie, tandis que :
a) chaque poste (26) comprend un plateau (22) sur lequel la bouteille (10) repose et peut être entraînée en rotation autour de son propre axe et
b) tous les capteurs (21, 21', 92, 94) et/ou au moins le repère (64, 64', 97, 103) associé à ces derniers sont fixés sur le carrousel (12) et sont entraînés en rotation avec celui-ci,
caractérisée en ce que :
- le plateau (22) est fixé sur une articulation à rotule (62) qui est reliée à une roue-satellite (38) par un axe (39), tandis qu'il est prévu une roue solaire (36) fixe avec laquelle la roue-satellite (38) engrène, de sorte que, lors de la rotation du carrousel (12), la roue-satellite (38) et, avec elle, le plateau (22) portant la bouteille (10) sont entraînés en rotation, le plateau étant toutefois mobile de tout côté d'une manière basculante,
- la bouteille (10) peut être serrée contre le plateau (22) par une pièce de tête (72) appliquée sur le goulot de la bouteille, cette pièce de tête étant fixée sur un chariot (80), mobile verticalement, de façon à pouvoir tourner librement sur une autre articulation à rotule (62'), tandis qu'il est prévu un dispositif à lever coudé (82) qui est agencé de façon à pouvoir être actionné à l'aide d'un galet-suiveur (83) qui, lors de la rotation du carrousel (12), suit un disque à came (84) fixé sur le bâti de la machine, ce dispositif à lever coudé (82) transformant un mouvement radial du galet-suiveur ainsi produit en un mouvement vertical du chariot, et
- pour la détection des paramètres "perpendicularité du fond" et perpendicularité du col et du goulot de la bouteille vis-à-vis de son axe", sont associés chaque poste (26) deux dispositifs de détection ( 21, 64 ; 21', 64') qui comprennent chacun un capteur de proximité (21 ; 21') et, à chaque capteur de proximité, est associée, en tant que repère, une bride (64 ; 64') qui est mobile le long de l'axe de la bouteille et est soumise à une précontrainte élastique en direction du fond ou du goulot de la bouteille et qui peut être appliquée axialement en direction du capteur de proximité (21 ; 21') par le plateau (22), animé d'un mouvement de nutation en cas de défaut de perpendicularité, ou par la pièce de tête (72) animée d'un mouvement de nutation en cas de défaut de perpendicularité.

2. Machine d'inspection suivant la revendication 1, dans laquelle, pour la détection des paramètres "volume et étanchéité", est associé à chaque poste (26) un dispositif (90) à l'aide duquel, d'une manière commandée par la rotation du carrousel et par un second disque à came (88) fixé sur le bâti de la machine, l'intérieur de la bouteille (10) peut être soumis à une pression qui peut être détectée par un capteur de pression (92), tandis qu'il est prévu que le dispositif (90) comprend un piston (194) qui est disposé dans un cylindre (93) et dont la tige du piston (195) peut être actionnée par le disque à came (88), de sorte qu'à partir d'une chambre cylindrique (93a) reliée au capteur de pression (92) et située devant le piston (194), un volume d'air déterminé peut être refoulé par la tête (68) dans la bouteille (10).

3. Machine d'inspection suivant la revendication 1, caractérisée en ce que, pour la détection du paramètre "hauteur de la bouteille", chaque chariot (80) porte, comme repère, un élément (97) dont la position en hauteur peut être détectée par un capteur (98) fixe qui est commun à tous les postes (26).

4. Machine d'inspection suivant la revendication 1, caractérisée en ce que, pour la détection du paramètre "code de la bouteille", chaque poste (26) comprend un dispositif de détection se présentant sous la forme d'un capteur opto-électrique (94) servant à reconnaître un marquage de code de bouteille (103) prévu sur la bouteille (10), tandis qu'à chaque poste (26), est prévue une buse d'air (96) servant à souffler de l'air sur la bouteille (10) dans la zone du marquage de code de bouteille (103).
